(19) Europäisches Patentamt
European Patent Office
Office européen des brevets

(11) EP 1 320 480 B1

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(21) Anmeldenummer: **01972008.5**

(22) Anmeldetag: **06.09.2001**

(51) Int Cl.[7]: **B62D 15/02**, G01D 3/08

(86) Internationale Anmeldenummer:
**PCT/EP2001/010242**

(87) Internationale Veröffentlichungsnummer:
**WO 2002/028696 (11.04.2002 Gazette 2002/15)**

(54) **VERFAHREN ZUM BESTIMMEN DER ABSOLUTEN WINKELSTELLUNG DES LENKRADES EINES KRAFTFAHRZEUGS**

METHOD FOR DETERMINING THE ABSOLUTE ANGULAR POSITION OF THE STEERING WHEEL OF A MOTOR VEHICLE

PROCEDE DE DETERMINATION DE LA POSITION ANGULAIRE ABSOLUE DU VOLANT D'UN VEHICULE

(84) Benannte Vertragsstaaten:
**DE ES FR GB IT**

(30) Priorität: **30.09.2000 DE 10048551**

(43) Veröffentlichungstag der Anmeldung:
**25.06.2003 Patentblatt 2003/26**

(73) Patentinhaber: **Leopold Kostal GmbH & Co. KG**
**58507 Lüdenscheid (DE)**

(72) Erfinder:
- **BLÄSING, Frank**
  **59457 Werl (DE)**
- **SCHIRP, Christian**
  **44866 Bochum (DE)**

(56) Entgegenhaltungen:
**DE-A- 4 022 837**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 320 480 B1

Printed by Jouve, 75001 PARIS (FR)

## Beschreibung

Die Erfindung betrifft ein Verfahren zum Bestimmen der absoluten Winkelstellung des Lenkrades eines Kraftfahrzeugs. Insbesondere betrifft die Erfindung ein solches Verfahren, bei dem durch eine Steuereinheit von einer dieser zugeordneten Sensoreinheit physikalisch erfaßte, erste Winkelmeßwerte mit einem konstanten ersten Zeitabstand fortlaufend eingelesen, weiterverarbeitet und als codierte Ausgabewerte über eine Ausgabeschnittstelle ausgegeben werden.

Die auch als Lenkwinkel bezeichnete absoluten Winkelstellung des Lenkrades wird bei Kraftfahrzeugen benötigt, um mit diesem Wert etwa ein Fahrdynamikregelsystem beaufschlagen zu können. Ein solches Fahrdynamikregelsystem erhält neben dem genannten Lenkwinkelwert weitere Meßdaten, etwa die Raddrehzahl oder die Drehung des Kraftfahrzeugs um seine Hochachse. Benötigt werden zum einen der absolute Lenkwinkeleinschlag und zum anderen die Lenkgeschwindigkeit, damit diese Werte zusammen mit den anderen erfaßten Daten durch das Fahrdynamikregelsystem ausgewertet und zum Steuern von Aktoren, beispielsweise der Bremsen und/oder des Motormanagements umgesetzt werden können.
Aus der DE 40 22 837 A1 ist ein gattungsgemäßer zur Durchführung eines solchen Verfahrens geeigneter, optoelektronischer Lenkwinkelsensor bekannt. Der in diesem Dokument beschriebene Lenkwinkelsensor umfaßt eine elektronische Steuereinheit sowie eine Sensoreinheit, bestehend aus zwei parallel und mit Abstand zueinander angeordneten Elementen - einer Lichtquelle und einem Zeilensensor - sowie einer zwischen der Lichtquelle und dem Zeilensensor angeordneten Codescheibe, die drehfest mit der Lenkspindel verbunden ist.

Als Zeilensensor dient eine CCD-Sensorzeile. Als Codierung ist bei dieser Codescheibe eine sich über 360° erstreckende, als Lichtschlitz ausgebildete archimedische Spirale vorgesehen. Über die Belichtung entsprechender Wandlerelemente des Zeilensensors bei einem bestimmten Lenkeinschlag kann Aufschluß über die tatsächliche Lenkwinkelstellung gewonnen werden. Die als Codierung eingesetzte archimedische Spirale ist kontinuierlich verlaufend ausgebildet, so daß diese als analoge Codierung angesprochen werden kann. Mit der gleichen Anordnung läßt sich aber auch ebensogut eine digitale Codierung auf der Codescheibe auslesen, die beispielsweise in Form eines Gray-Codes ausgeführt sein kann.

Die Ausgaberate der von einem solchen Lenkwinkelsensor ausgegebenen Meßwerte wird i. a. durch das übergeordnete Fahrdynamikregelsystem bestimmt, so daß in der Regel in gleichmäßigen Zeitabständen (z. B. alle 10 msec) durch die Sensoreinheit ein Winkelmeßwert physikalisch erfaßt, dieser Wert von der Steuereinheit eingelesen, weiterverarbeitet und über eine Ausgabeschnittstelle als codierter Ausgabewert an das Fahrdynamikregelsystem ausgegeben wird.

Bedingt durch eine solche feste Ausgaberate wird der Winkelbereich, der zwischen zwei Messungen überstrichen wird, mit zunehmender Drehwinkelgeschwindigkeit des Lenkrades immer größer. Dies hat jedoch starke Einschränkungen der Zuverlässigkeit der bei solchen Systemen üblicherweise zur Funktionskontrolle eingesetzten, auf Plausibilitätskriterien beruhenden Überprüfungsverfahren zur Folge, da mit wachsender Winkelgeschwindigkeit eine immer größere Differenz zwischen zwei aufeinanderfolgend gemessenenen Winkelwerten als korrekt akzeptiert werden muß.

Ausgehend von diesem diskutierten Stand der Technik liegt der Erfindung daher die Aufgabe zugrunde, ein Verfahren der eingangs genannten Art dergestalt weiterzubilden, daß auch bei hohen Drehwinkelgeschwindigkeiten des Lenkrades eine sichere und mittels Plausibilitätsbetrachtungen überprüfbare Winkelerfassung möglich ist.

Diese Aufgabe wird erfindungsgemäß durch die Merkmale des 1. Anspruchs gelöst, wobei für jeden Ausgabewert durch die Steuereinheit zumindest ein weiterer, zweiter Winkelmeßwert eingelesen wird, wobei zwischen den Einlesevorgängen jeweils eines ersten und eines diesem zugeordneten zweiten Winkelmeßwerts ein zweiter Zeitabstand liegt, der gegenüber dem ersten Zeitabstand kürzer ist.

Weitere Vorteile und Ausgestaltungen der Erfindung sind Bestandteil weiterer Unteransprüche sowie der nachfolgenden Beschreibung eines Ausführungsbeispiels unter Bezugnahme auf die beigefügten Figuren. Es zeigen:

**Fig. 1:** den zeitlichen Ablauf der Messungen bei maximaler Winkelgeschwindigkeit

**Fig. 2:** Ein Diagramm zur Optimierung der Zeitabstände zwischen einer "Haupt"- und einer "Kontroll"-messung

Bei dem dargestellten Ausführungsbeispiel wird von einem Lenkwinkelsensorsystem ausgegangen, das in einem ersten Zeitabstand von 10 msec Winkelwerte mit einer Auflösung von 1,5° erfaßt, in einem Mikrocontroller weiterverarbeitet und als codierte Ausgabewerte über eine Ausgangsschnittstelle ausgibt. Als maximale durch das Lenkwinkelsensorsystem verarbeitbare Winkelgeschwindigkeit des Lenkrades kann dabei ein Wert von 3000°/sec auftreten. Die Winkeldifferenz zwischen zwei aufeinanderfolgenden Messungen beträgt, wie auch in Fig. 1 für dieses Beispiel dargestellt, bei der maximalen Winkelgeschwindigkeit 30°, so daß ein auf einer Plasibilitätsüberprüfung aufeinanderfolgender Meßwerte beruhendes Funktionskontrollverfahren nach einem gegebenen ersten Meßwert alle im Bereich von ± 30° um diesen liegenden Nachfolgewerte als korrekte Werte akzeptieren muß. Damit beträgt aber der maximal mögliche Meßfehler, der von einem solchen Verfahren nicht erkannt werden könnte, ebenfalls ± 30°, was jedoch für eine brauchbare Funktionskontrolle deutlich zu hoch ist. Um diesen Wert zu verringern, wird zu einem bestimmten Zeitpunkt, der innerhalb des ersten Zeitabstands von 10 msec liegt, ein zweiter Winkelmeßwert erfaßt und eingelesen. Dabei werden die jeweils zuerst eingelesenen Meßwerte als sogenannte Hauptwerte behandelt, die nach ihrer Weiterverarbeitung und der erfolgten Plausibilitätskontrolle zur in codierter Form erfolgenden Ausgabe an ein Fahrdynamikregelsystem vorgesehen sind. Die Plausibilitätskontrolle besteht dabei in der Abfrage, ob die Winkeldifferenz zwischen dem aktuell vorliegenden Hauptwert und dem dem zuvor ausgegebenen Ausgabewert zugrundeliegenden, zuletzt erfaßten Hauptwert einen vorgegebenen ersten Maximalwert überschreitet oder nicht. Ist der Maximalwert nicht überschritten, so wird der aktuell vorliegende Hauptwert als korrekt akzeptiert und ohne weiteres in codierter Form ausgegeben. Ist der Maximalwert jedoch überschritten, so wird anhand des nach dem vorangegangenen Hauptwert gemessenen Kontrollwertes überprüft, ob die große Differenz durch eine hohe Winkelgeschwindigkeit verursacht sein kann oder nicht. Dazu wird wiederum eine Winkeldifferenz bestimmt, und zwar diesmal die zwischen dem zuletzt gemessenenen Kontrollwert und dem zugehörigen Hauptwert, also dem dem zuvor ausgegebenen Ausgabewert zugrundeliegenden. Wenn diese zweite Differenz einen unter Berücksichtigung des kürzeren Zeitabstandes zwischen der Messung des Haupt- und Kontrollwertes der ersten zu überprüfenden Differenz entsprechenden Zwischenwert darstellt und außerdem einen vorgegebenen zweiten Maximalwert nicht überschreitet, so wird der aktuell vorliegende Hauptwert als korrekt akzeptiert und ohne weiteres ausgegeben. Ist dies jedoch nicht der Fall, so wird davon ausgegangen, daß eine Fehlmessung vorliegt, und es wird statt des Ausgabewertes eine entsprechende Fehlermeldung ausgegeben. Wegen des geringeren zeitlichen Abstandes zwischen der auch als Hauptmessung bezeichneten Erfassung des Hauptwerts und der auch als Kontrollmessung bezeichneten Erfassung des Kontrollwerts im Vergleich zu dem Abstand zwischen zwei Hauptmessungen, kann dieser zweite Maximalwert deutlich geringer sein als der erste Maximalwert von 30°, wodurch eine Verringerung der Fehlermöglichkeit erreicht ist.

Zur Bestimmung der optimalen Länge dieses zweiten Zeitabstandes, der zwischen einer Hauptmessung und der zugehörigen Kontrollmessung liegt, geht man von folgender Überlegung aus:

> Grundsätzlich sollte der Zeitpunkt für die Kontrollmessung möglichst nahe bei der zugehörigen Hauptmessung liegen, denn je kleiner die zeitliche Differenz ist, um so geringer ist die bei maximaler Winkelgeschwindigkeit zwischen den beiden Messungen zurückgelegte Winkeldifferenz, die zugleich besagten zweiten Maximalwert bildet. Eine Einschränkung des Zeitabstandes nach unten ist jedoch dadurch gegeben, daß sichergestellt sein muß, daß ab der (Grenz-)Winketgeschwindigkeit, ab der die Hauptmessung mit einem größeren als dem gerade noch akzeptablen Winkelfehler behaftet ist, zwischen der Hauptmessung und der zugehörigen Kontrollmessung zumindest eine der Auflösung des Meßsystems entsprechende Winkeldifferenz zurückgelegt wurde, um überhaupt eine definierte Aussage erhalten zu können.

Dabei bestehen zwischen den Werten für die maximale Winkelgeschwindigkeit $\omega_{max}$, die Auflösung $\alpha$, den ersten Zeitabstand T (zwischen zwei Hauptmessungen), den zweiten Zeitabstand t (zwischen Hauptmessung und zugehöriger Kontrollmessung) und die beschriebene Grenzwinkelgeschwindigkeit $\omega_g$ die folgenden Zusammenhänge:

$$\omega_{max} * t = \omega_g * T \Rightarrow \omega_g = \omega_{max} * t/T$$

$$\omega_g = \alpha/t$$

Diese beiden funktionalen Zusammenhänge zwischen $\omega_g$ und t sind mit den im obigen Beispiel genannten Werten auch in dem Diagramm in Fig. 2 dargestellt. Der optimale Wert für die Grenzwinkelgeschwindigkeit $\omega_g$ ergibt sich dann, wenn beide Bedingungen erfüllt sind, d.h. am Schnittpunkt der beiden Kurven. Dann gilt:

$$\omega_g = \pm(\alpha * \omega_{max} / T)^{1/2}$$

Mit T = 10 msec ergibt dies:
$\omega_g = \pm$ 670°/sec und t = 2,236 msec

Das heißt der optimale zeitliche Abstand zwischen einer Hauptmessung und der zugehörigen Kontrollmessung beträgt in diesem Beispiel 2,236 msec. Dadurch verringert sich der bei der maximalen Winkelgeschwindigkeit auftretende, maximale nicht erkennbare Winkelfehler von vorher 30° auf nunmehr 6,7°.

Wird für den zeitlichen Abstand zwischen einer Hauptmessung und der zugehörigen Kontrollmessung ein geringerer Wert gewählt, so wächst der maximale nicht erkennbare Winkelfehler, da erst ab einer höheren Winkelgeschwindigkeit eine Unterscheidbarkeit der Werte von Haupt- und Kontrollmessung vorliegt. Bei t = 2 msec beispielsweise ist $\omega_g = \pm$750°/sec, d.h. der maximale nicht erkennbare Winkelfehler beträgt 7,5°.

Wird für den zeitlichen Abstand zwischen einer Hauptmessung und der zugehörigen Kontrollmessung ein größerer Wert gewählt, so wächst der maximale nicht erkennbare Winkelfehler, da bei der maximalen Winkelgeschwindigkeit zwischen Haupt- und Kontrollmessung ein größerer Winkelbereich überschritten. Bei t = 3 msec beispielsweise wird zwischen Haupt- und Kontrollmessung ein Winkelbereich von 9° überstrichen, so daß eine Differenz kleiner 9° nicht als Fehler erkannt werden kann.

Der letztere Fall ist jedoch nicht als so kritisch zu bewerten, da selbst bei einem solchen, größeren Differenzwinkel zwischen Haupt- und Kontrollmessung die zuvor beschriebene Überprüfung, ob diese zweite Differenz einen unter Berücksichtigung des kürzeren Zeitabstandes zwischen Haupt- und Kontrollmessung der ersten zu überprüfenden Differenz (zwischen zwei Hauptmessungen) entsprechenden Zwischenwert darstellt, bereits ein durchaus verläßliches Ergebnis bieten wird. Dies ist deshalb der Fall, weil i.a. davon auszugehen ist, daß Änderungen der Lenkwinkelgeschwindigkeit allein aufgrund der Masseträgheit des Lenkrads nicht so abrupt erfolgen können, daß eine Verletzung dieses Kriteriums mit der normalen Bewegungsdynamik des Lenkrads vereinbar wäre. Eine Verletzung dieses "Kontinuitätskriteriums" deutet deshalb mit hoher Sicherheit auf das Vorliegen einer Fehlmessung hin.

**Patentansprüche**

1. Verfahren zum Bestimmen der absoluten Winkelstellung des Lenkrades eines Kraftfahrzeugs, wobei durch eine Steuereinheit von einer dieser zugeordneten Sensoreinheit physikalisch erfaßte erste Winkelmeßwerte mit einem konstanten ersten Zeitabstand fortlaufend eingelesen, weiterverarbeitet und als codierte Ausgabewerte über eine Ausgabeschnittstelle ausgegeben werden, **dadurch gekennzeichnet, daß** für jeden Ausgabewert durch die Steuereinheit zumindest ein weiterer, zweiter Winkelmeßwert eingelesen wird, wobei zwischen den Einlesevorgängen jeweils eines ersten und eines diesem zugeordneten zweiten Winkelmeßwerts ein zweiter Zeitabstand liegt, der gegenüber dem ersten Zeitabstand kürzer ist.

2. Verfahren nach Anspruch 1, **dadurch gekennzeichnet, daß** der jeweils erste Winkelmeßwert als Hauptwert und die weiteren innerhalb des ersten Zeitabstands eingelesenen zweiten Winkelmeßwerte als Kontrollwerte verwendet werden.

3. Verfahren nach Anspruch 2, **dadurch gekennzeichnet, daß** eine erste Winkeldifferenz zwischen dem aktuell eingelesenen Hauptwert und dem zuletzt eingelesenen Hauptwert berechnet, und bei Überschreiten eines ersten Grenzwertes durch diese erste Winkeldifferenz der aktuell eingelesene Hauptwert mittels zumindest eines Kontrollwertes auf seine Plausibilität untersucht wird.

4. Verfahren nach Anspruch 3, **dadurch gekennzeichnet, daß** zur Plausibilitätsuntersuchung eine zweite Winkeldifferenz zwischen einem der zuletzt eingelesenen Kontrollwerte und dem diesem zugeordneten Hauptwert bestimmt wird, und daß überprüft wird, ob diese zweite Winkeldifferenz unter Berücksichtigung des kürzeren Zeitabstandes zwischen der Messung des Haupt- und Kontrollwertes einen der ersten Winkeldifferenz entsprechenden Zwischenwert darstellt.

5. Verfahren nach Anspruch 4, **dadurch gekennzeichnet, daß** der aktuell eingelesene Hauptwert als korrekt akzeptiert und als codierter Ausgabewert ausgegeben wird, falls die zweite Winkeldifferenz den korrekten Zwischenwert darstellt.

6. Verfahren nach Anspruch 4, **dadurch gekennzeichnet, daß** der aktuell eingelesene Hauptwert als korrekt akzeptiert und als codierter Ausgabewert ausgegeben wird, falls die zweite Winkeldifferenz den korrekten Zwischenwert darstellt und einen vorgegebenen zweiten Maximalwert nicht überschreitet.

7. Verfahren nach einem der Ansprüche 4 bis 6, **dadurch gekennzeichnet, daß** statt des Ausgabewertes eine entsprechende Fehlermeldung ausgegeben wird, falls die zweite Winkeldifferenz nicht den korrekten Zwischenwert darstellt.

8. Verfahren nach einem der Ansprüche 1 bis 7, **dadurch gekennzeichnet, daß** der zweite Zeitabstand in Abhängigkeit des ersten Zeitabstandes, der maximal zulässigen Winkelgeschwindigkeit und der Auflösung der Meßwerterfassung festgelegt wird.

**Claims**

1. Process for determining the absolute angular position of the steering wheel of a motor vehicle in which first angular-position measurement values are physically recorded by a sensor unit assigned to a control unit which, at a constant first interval, continuously reads in, further processes and outputs the same as coded output values via an output interface, **characterized by** the fact that at least one further, second angular-position measurement value is read-in for each output value by the control unit, for which purpose there is a second interval between the read-in processes of a first and a second angular-position measurement value assigned to the same, respectively, which second interval is shorter than the first interval.

2. Process in accordance with Claim 1, **characterized by** the fact that the respective first angular-position measurement value is used as the primary value and the further, second angular-position measurement values read-in during the first interval are used as control values.

3. Process in accordance with Claim 2, **characterized by** the fact that a first angular difference between the current read-in primary value and the last read-in primary value is calculated and the plausibility of the currently read-in primary value examined by means of at least one control value if a first limit value is exceeded by this first angular difference.

4. Process in accordance with Claim 3, **characterized by** the fact that a second angular difference is determined between one of the last read-in control values and the primary value assigned to the same for the purpose of examining the plausibility, and that a check is conducted as to whether this second angular difference represents an intermediate value corresponding to the first angular difference when the shorter interval between the measurement of the primary value and the control value is taken into consideration.

5. Process in accordance with Claim 4, **characterized by** the fact that the currently read-in primary value is accepted as being correct and output as an encoded output value if the second angular difference represents the correct intermediate value.

6. Process in accordance with Claim 4, **characterized by** the fact that the currently read-in primary value is accepted as correct and output as an encoded output value if the second angular difference represents the correct intermediate value and does not exceed a prescribed second maximum value.

7. Process in accordance with any of Claims 4 to 6, **characterized by** the fact that an appropriate error message will be output instead of the output value if the second angular difference does not represent the correct intermediate value.

8. Process in accordance with any of Claims 1 to 7, **characterized by** the fact that the second interval is determined in dependence on the first interval, the maximum permissible angular velocity, and the resolution of the measured-value acquisition.

## Revendications

1. Procédé pour la détermination de la position angulaire absolue du volant d'un véhicule automobile, selon lequel, par une unité de commande, des premières valeurs de mesure d'angle, saisies physiquement par une unité de détection, associée à celle-ci, sont, avec un premier intervalle de temps constant, continuellement lues, traitées et sorties, par l'intermédiaire d'une interface de sortie, en tant que valeurs de sortie codées, **caractérisé en ce que**, pour chaque valeur de sortie, avec l'unité de commande, on lit, au moins, une deuxième valeur de sortie, tandis qu'il existe entre chaque processus de lecture d'une première valeur de mesure d'angle et d'une deuxième valeur de mesure d'angle, associée à la première, un deuxième intervalle de temps qui est plus court que le premier intervalle de temps.

2. Procédé selon la revendication 1, **caractérisé en ce que** chaque première mesure de mesure d'angle est utilisée en tant que valeur principale et les deuxièmes valeurs de mesure d'angle, lues au cours du premier intervalle de temps, sont utilisées en tant que valeurs de contrôle.

3. Procédé selon la revendication 2, **caractérisé en ce qu'**une première différence d'angle entre la valeur principale actuellement lue et la valeur principale lue en dernier lieu est calculée et que, lorsque cette première différence d'angle surpasse une première valeur limite, la valeur actuellement lue est contrôlée quant à sa plausibilité, à l'aide d'au moins une valeur de contrôle.

4. Procédé selon la revendication 3, **caractérisé en ce que**, pour le contrôle de la plausibilité, une deuxième différence d'angle est déterminée entre l'une des valeurs de contrôle lues en dernier lieu et la valeur principale associée à celle-ci, et qu'on vérifie si cette deuxième différence d'angle, compte tenu de l'intervalle de temps plus court entre la mesure de la valeur principale et de la valeur de contrôle, représente une valeur intermédiaire correspondant à la première différence d'angle.

5. Procédé selon la revendication 4, **caractérisé en ce que,** la valeur principale actuellement lue est acceptée en tant que correcte et est sortie en tant que valeur de sortie codée, dans les cas où la deuxième différence d'angle représente la valeur intermédiaire correcte.

6. Procédé selon la revendication 4, **caractérisé en ce que**, la valeur principale actuellement lue est acceptée en tant que correcte et est sortie en tant que valeur de sortie codée, dans les cas où la deuxième différence d'angle représente la valeur intermédiaire correcte et ne surpasse pas une deuxième valeur maximale prédéterminée.

7. Procédé selon l'une des revendications 4 à 6, **caractérisé en ce qu'**à la place de la valeur de sortie, un message d'erreur adéquat est sorti, dans les cas où la deuxième différence d'angle ne représente pas la valeur intermédiaire correcte.

**8.** Procédé selon l'une des revendications 1 à 7, **caractérisé en ce que** le deuxième intervalle de temps est fixé en dépendance du premier intervalle de temps, de la vitesse angulaire maximale, admise et de la résolution de la saisie des valeurs de mesure.

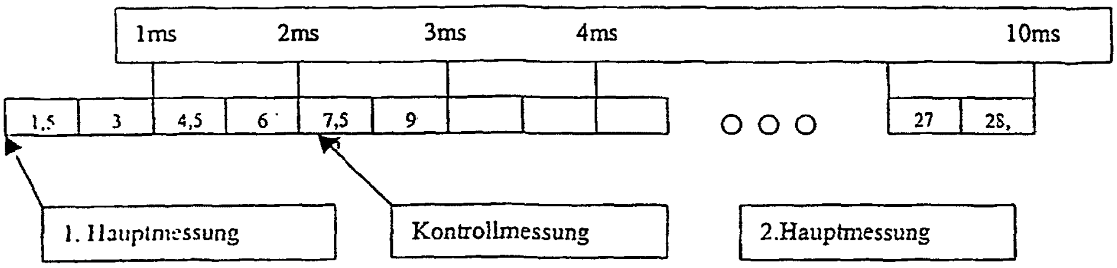
1ms
2ms
3ms
4ms
10ms
1,5
3
4,5
6
7,5
9
27
28,
1. Hauptmessung
Kontrollmessung
2.Hauptmessung

Fig. 1

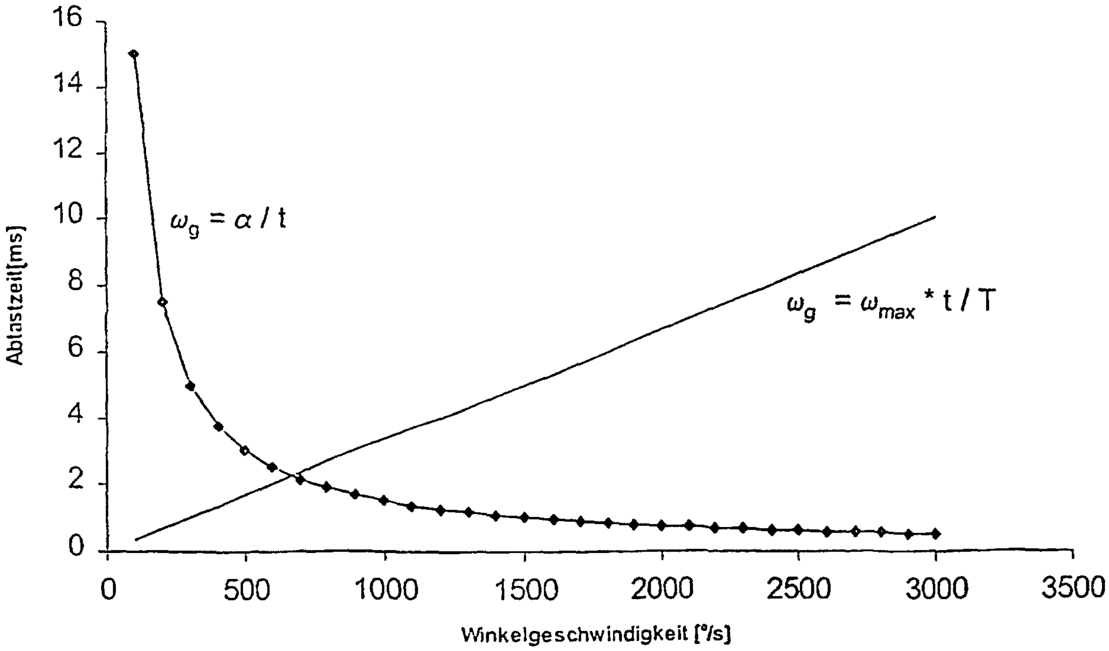
16
14
12
10
8
6
4
2
0
Abtastzeit[ms]
$\omega_g = \alpha / t$
$\omega_g = \omega_{max} * t / T$
0
500
1000
1500
2000
2500
3000
3500
Winkelgeschwindigkeit [°/s]

Fig. 2